# FASCICULE DE BREVET EUROPEEN

(11) **EP 1 355 534 B1**
(45) Date de publication et mention de la délivrance du brevet: **17.08.2005**
(21) Numéro de dépôt: 02701356.4
(22) Date de dépôt: 31.01.2002
(51) Int. Cl.: A22C 11/00

(54) **PROCEDE ET DISPOSITIF DE FABRICATION ET DE CONDITIONNEMENT DE PRODUITS DE TYPE SAUCISSE**
VERFAHREN UND VORRICHTUNG ZUR HERSTELLUNG UND BEHANDLUNG WURSTARTIGER PRODUKTE
METHOD AND DEVICE FOR PRODUCING AND PACKAGING SAUSAGE-TYPE PRODUCTS

(30) Priorité: 01.02.2001 FR 0101470
(43) Date de publication de la demande: 29.10.2003
(73) Titulaire: Sonjal S.A.S., 56150 Baud (FR)
(72) Inventeur: LE PAIH, Jacques, F-56930 Plumeliau (FR)
(74) Mandataire: Bentz, Jean-Paul
(86) Numéro de dépôt international: PCT/FR2002/000364
(87) Numéro de publication internationale: WO 2002/060264

(56) Documents cités:
- WO-A-00/44233
- WO-A-99/13729
- FR-A- 2 306 638
- NL-A- 9 201 307
- US-A- 3 700 847
- US-A- 4 258 066

## Description

La présente invention concerne la fabrication et le conditionnement en barquettes de produits de type saucisse.

Dans le contexte de la présente invention, ces produits consistent en un boudin constitué d'un hachis de viande ou poisson et/ou légumes, recouvert d'une peau et débité en portions, dont la section peut être quelconque, bien que généralement ronde. Et concernant la fabrication de ces produits, ils sont obtenus par coextrusion d'un boudin enduit d'une base de départ comportant un ou plusieurs hydrocolloïdes tels qu'alginate ou pectate de sodium, pectine, carraghénates, etc., laquelle base est destinée à former la peau par gélification calcique dans un bain en aval des moyens de coextrusion. Suite à une immersion sur une durée déterminée dans le bain, le boudin est mis en portions, rincé, séché, puis conditionné. Dans un mode de fabrication en continu, le boudin en sortie de la tête de coextrusion passe dans le bain de gélification allongé horizontalement de manière à déterminer le temps d'immersion requis. Un tel mode de fabrication est déjà connu du document WO-00/44233. Pour plus de détails, on pourra se référer à la demande de brevet français connexe déposée le même jour et au même nom que la présente, et intitulée "Produit de type saucisse et son procédé de fabrication".

L'invention procède d'une recherche en vue d'optimiser le procédé de fabrication et de conditionnement de tels produits et le dispositif.pour sa mise en oeuvre, en.exploitant des spécificités liées au mode même de fabrication par coextrusion et gélification, ainsi que des spécificités au niveau des produits.

En ce sens, l'invention procède d'abord du fait que plusieurs lignes de fabrication peuvent être placées en parallèle pour produire toutes selon une même vitesse de coextrusion plusieurs boudins transitant dans un bain de gélification commun. En aval de la gélification, on peut alors faciliter le conditionnement en barquettes en ayant rapproché côte à côte les boudins formés en parallèle avant de les mettre en portions avec des mêmes moyens transversaux agissant transversalement et simultanément sur tous les boudins, pour former des lots de produits de même longueur parfaitement regroupés et alignés.

Autrement dit, l'invention est un procédé de fabrication et de conditionnement de produits de type saucisse, selon lequel lesdits produits sont fabriqués par coextrusion en continu d'un boudin enduit d'une base de départ comprenant un ou plusieurs hydrocolloïdes et destinée à constituer une peau par gélification calcique lors du passage dudit boudin dans un bain de gélification allongé, ledit boudin étant ensuite débité en portions destinées à être conditionnées dans des barquettes ;
lequel procédé est caractérisé en ce que plusieurs boudins sont coextrudés en parallèle et selon une même vitesse de coextrusion, en ce qu'on les fait transiter dans un bain de gélification commun, en ce qu'ils sont rapprochés côte à côte pour être ensuite mis en portions par des mêmes moyens agissant transversalement sur l'ensemble desdits boudins, afin de former des lots de produits identiques parfaitement regroupés et alignés pour être chargés dans leur barquette de conditionnement.

L'invention concerne également un dispositif pour la mise en oeuvre dudit procédé, caractérisé en ce qu'il comprend : une pluralité de têtes de coextrusion alignées transversalement ; un bac de gélification allongé horizontalement et dans l'extrémité amont duquel débitent lesdites têtes de coextrusion ; des moyens pour rapprocher côte à côte les boudins formés avant leur mise en portions ; des moyens communs de mise en portions des boudins agissant transversalement sur l'ensemble desdits boudins rapprochés ; et des moyens pour charger dans leurs barquettes les lots de produits formés en sortie desdits moyens de mise en portions.

Selon d'autres caractéristiques préférentielles de l'invention concernant ce dispositif,
- lesdits moyens pour rapprocher lesdits boudins côte à côte sont des guides disposés dans la partie d'extrémité aval dudit bac de gélification ;
- les moyens de mise en portions consistent en deux mêmes bandes sans fin synchronisées disposées l'une au-dessus de l'autre de manière à former entre elles pour lesdits boudins rapprochés côte à côte un passage se rétrécissant verticalement d'amont en aval, lesquelles bandes sans fin comprennent des tasseaux transversaux passant en vis-à-vis dans ledit passage de manière à pincer progressivement d'amont en aval lesdits.boudins et finalement les sectionner ;
- une première bande transporteuse orientée longitudinalement reçoit les lots de portions formés en sortie desdits moyens de mise en portions, et le long de celle-ci sont prévus des moyens de rinçage desdites portions, auxquels sont associés avantageusement en aval des moyens de séchage ;
- les lots de portions sont transférés par gravité en bout de ladite bande transporteuse, une seconde bande transporteuse étant disposée au-dessous de celle-ci pour transporter en accumulation, dans la même direction et à la même vitesse lesdites barquettes, en les faisant passer par une position de chargement immédiatement au-dessous de l'extrémité aval de la première bande transporteuse.

Les caractéristiques et avantages de l'invention, ainsi que d'autres, apparaîtront plus clairement dans la description suivante, faite en relation avec les dessins joints, dans lesquels :
la Fig. 1 est une vue schématique de côté d'un dispositif selon l'invention ;
la Fig. 2 est une vue schématique de dessus correspondant sensiblement à la Fig. 1, sauf que n'y apparaît pas la partie aval de conditionnement ;
la Fig. 3 est une vue schématique de côté, à plus grande échelle, de l'ensemble de mise en portions du dispositif des Figs. 1 et 2 ;
la Fig. 4 est une vue schématique de côté, également à plus grande échelle, de la partie aval de conditionnement du même dispositif ; et
les Figs. 5a et 5b sont des vues schématiques en perspective de deux exemples de têtes de coextrusion utilisables selon l'invention.

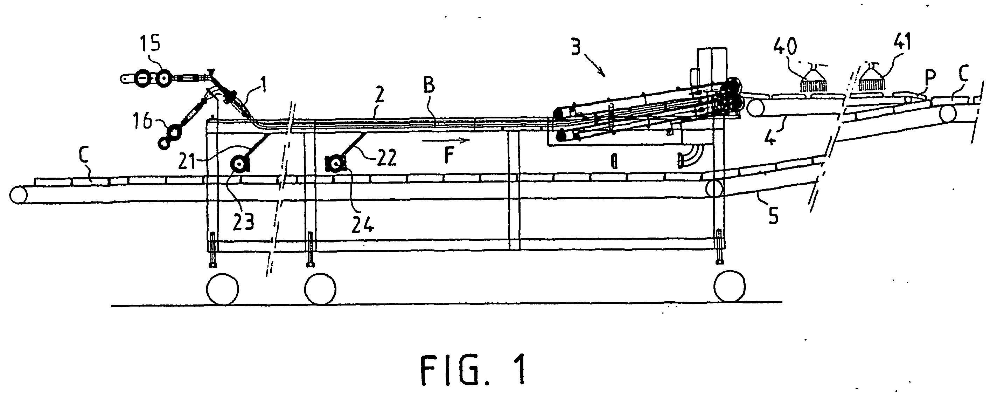

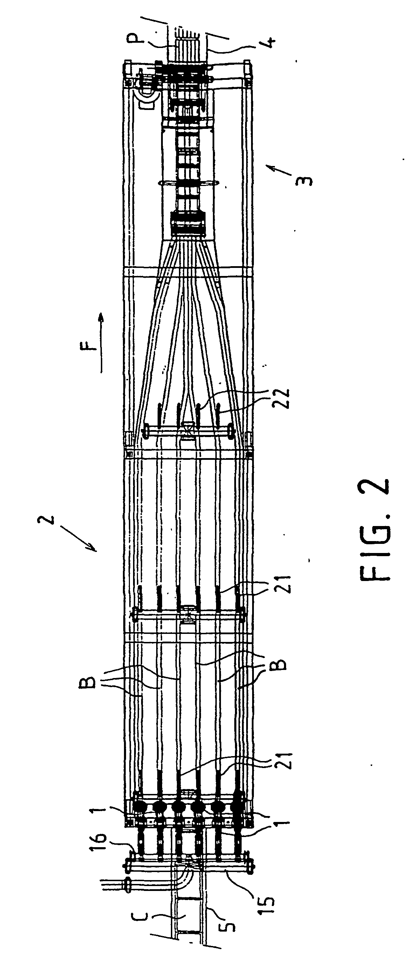

Considérant d'abord les Figs. 1 et 2, elles représentent l'essentiel d'un dispositif selon l'invention, qui comporte en son extrémité amont une pluralité de têtes de coextrusion 1 alignées transversalement. Bien que celles-ci puissent être alimentées individuellement, pour permettre par exemple la fabrication en parallèle d'un panachage de produits, elles sont représentées à la Fig. 2 connectées par leurs entrées à des collecteurs d'alimentation communs transversaux 15, 16. Dans les deux cas, des moyens de régulation sont prévus pour égaliser la vitesse de coextrusion sur l'ensemble des têtes 1.

Les têtes de coextrusion sont orientées de manière à débiter vers l'aval du dispositif dans l'extrémité amont d'un bac de gélification 2, et de préférence légèrement au-dessus de la surface du bain de gélification. Le bac 2 est peu profond et à fond plat, et il est allongé longitudinalement (selon la flèche F), sa longueur étant déterminée en fonction de la vitesse de coextrusion et du temps de passage ou temps d'immersion requis pour les boudins B formés en sortie des têtes de coextrusion 1 dans le bain de gélification. Dans le bac 2, des couloirs de guidage non représentés peuvent être formés dans l'alignement longitudinal des têtes de coextrusion 1.

Les repères 21 et 22 désignent respectivement des conduits de refoulement et d'aspiration piqués dans le fond du bac de gélification 2, qui sont réunis en un circuit de recyclage du bain de gélification. Ils sont d'autre part disposés de manière à créer un flux ou courant selon la flèche F dans le bain de gélification, qui contribuera à y faire avancer les boudins B. A cet effet, les conduits de refoulement 21 sont placés en amont des conduits d'aspiration 22, et de préférence, comme l'illustre schématiquement la Fig. 2, ils sont disposés en rangées, en alignement des têtes de coextrusion 1, et connectés au susdit circuit de recyclage par des collecteurs transversaux respectifs 23 et 24.

D'autre part, et selon une caractéristique importante de l'invention, la partie aval du bac 2 comporte des moyens de guidage qui ont pour fonction de réunir tous les boudins B en un faisceau où ils sont rapprochés en contact côte à côte. A cet effet, tel que représenté, le bac 2 a sa partie d'extrémité aval qui forme convergent pour guider les boudins B les plus extérieurs, tandis que les autres sont guidés par des parois, non représentées.

Un ensemble de mise en portions 3 reçoit ledit faisceau de boudins B rapprochés en contact côte à côte en sortie du bac de gélification 2. Il comporte des moyens pour pincer transversalement l'ensemble dudit faisceau à intervalles réguliers définissant la longueur des portions P. D'amont en aval dans l'ensemble 3, le pincement est progressif et se termine directement avant la sortie par un sectionnement transversal dudit faisceau. Dans la forme de réalisation représentée et plus clairement visible à la Fig.. 3, l'ensemble 3 est constitué de deux bandes sans fin 31, 32 disposées l'une au-dessus de l'autre, formant entre leurs brins en regard un passage 30 qui se rétrécit d'amont en aval. Les moyens de pincement sont des tasseaux transversaux 33 disposés selon un même écartement sur les bandes sans fin 31 et 32. Les deux bandes sans fin 31, 32 sont synchronisées de telle manière que les tasseaux 33 se déplacent par paires en vis-à-vis le long du passage 30. De préférence, les tasseaux 33 sont des profilés ayant une certaine élasticité leur permettant de s'écraser légèrement, et à cet effet, il peuvent être des profilés creux à sommet arrondi comme représenté, avantageusement en élastomère. Bien entendu, la vitesse de défilement dans l'ensemble 3 est la même que la vitesse de coextrusion, étant donné que c'est l'ensemble .3 qui entraîne positivement les boudins B formés par les têtes de coextrusion 1.

Les portions P sortent de l'ensemble 3 en formant des lots au sein desquels elles sont identiques, avec un alignement parfait de leurs extrémités avant et leurs extrémités arrière, et réunies en contact côte à côte. Ces lots sont immédiatement repris sur une première bande transporteuse 4 le long de laquelle les portions P peuvent être rincées d'abord, au moyen de douchettes 40, puis séchées par des sécheurs 41.

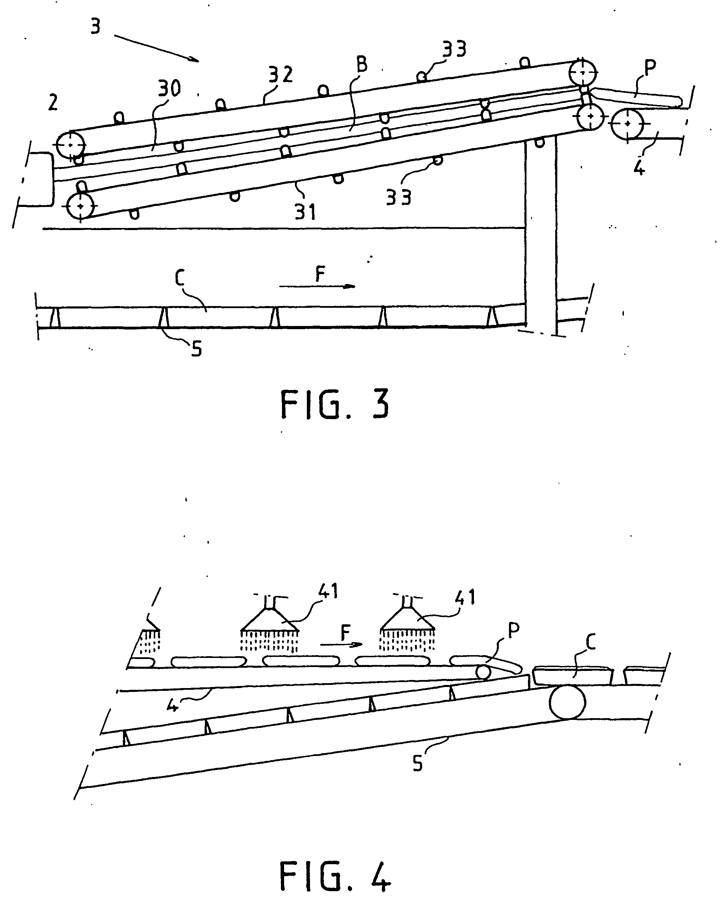

Pour le chargement des lots de portions P dans des barquettes, et comme le montre plus clairement la Fig. 4, en association avec la première bande transporteuse 4, est arrangée au-dessous d'elle une seconde bande convoyeuse 5 transportant en accumulation des contenants C de type barquette, et les faisant passer en position de chargement, à savoir immédiatement au-dessous de l'extrémité de sortie de la bande 4, laquelle extrémité est de préférence, comme représentée, de type sabre. Les bandes 4 et 5 sont synchronisées de telle maniére que les lots de portions P se déposent par simple gravité dans les barquettes C destinées à les recevoir.

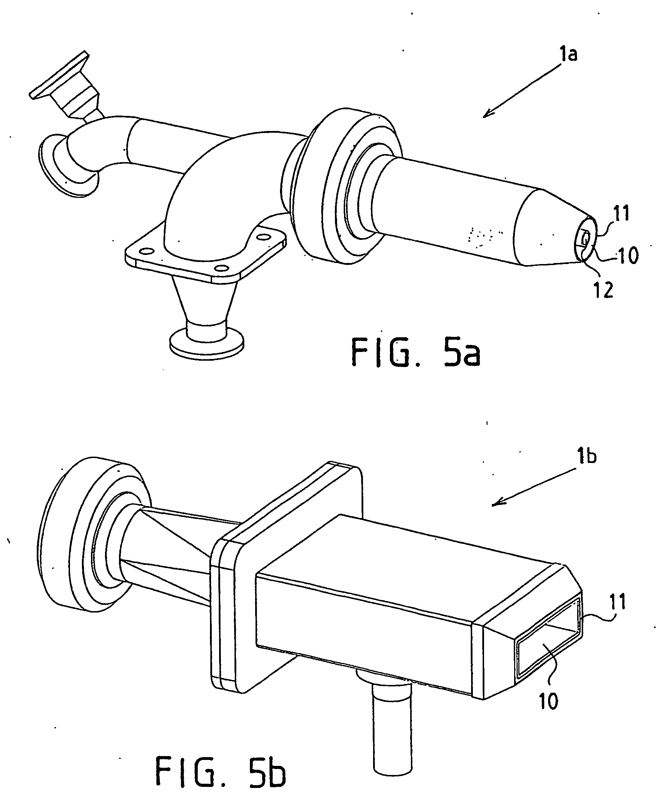

Les Figs. 5a et 5b, par les exemples de tête de coextrusion 1a et 1b qu'elles représentent, illustrent le fait que de multiples variantes de produits peuvent être fabriquées avec un dispositif selon l'invention. La tête de coextrusion la est prévue pour la fabrication de produits de section ronde, et permet en outre en option de garnir le coeur des produits par une troisième sortie centrale 12 en plus de sa sortie principale 10 et de sa sortie périphérique 11, tandis que la tête de coextrusion 1b sert pour réaliser des sections rectangulaires.

Un exemple d'utilisation du dispositif de l'invention pour la fabrication de saucisses de viande va maintenant être décrit.

Ont tout d'abord été préparés pour constituer la peau sur la chair de la saucisse :
a) une base par adjonction dans de l'eau d'environ :
   - 5 % en poids d'alginate de sodium ;
   - 2 % en poids de phosphate di-calcique anhydre ;
   - 1 % en poids de sorbate de potassium ;
   - 10 % en poids d'une charge de sucres ;
b) un bain de gélification par adjonction dans de l'eau :
   - 2 % en poids de lactate de calcium ;
   - 1 % en poids d'acide citrique.

La base a été chargée dans un réservoir alimentant la sortie périphérique 11, Figs. 5a et 5b, des têtes de coextrusion 1 ; et le bain de gélification dans le bac allongé 2. Les têtes de coextrusion 1 ont été réglées pour débiter selon un rapport en poids de 90 à 99 % pour la viande de la saucisse par leur sortie 10 et le complément à 100 % pour ladite base destinée à constituer la peau par leur sortie périphérique 11. Les boudins formés traversent le bain de gélification, entraînés par l'ensemble de mise en portions 3, et aussi par le flux créé dans le bain par le circuit de recyclage, lequel recyclage consiste en un apport continu de lactate de calcium.

Dans le bain de gélification, deux gélifications se produisent simultanément :
une gélification par trempage avec les ions calcium libres présents en abondance dans le bain ; dès immersion, un film extérieur d'alginate de calcium se forme à la surface extérieure de ladite base ;
une gélification un peu moins rapide par libération des ions calcium intégrés dans ladite base, provoquée par le pH acide du bain.

A la sortie du bain, les boudins B passent en contact côte à côte dans le dispositif de mise en portions 3 qui, d'amont en aval, procède, d'abord à un pincement progressif du faisceau de boudins B ayant pour effet dans chacun de chasser la viande de chaque côté, et d'aplatir complètement la peau sur elle-même sur la longueur de pincement. A ce stade, la gélification acide encore en cours est un avantage important en ce qu'elle crée une soudure ou pontage entre les deux couches de peau pincées l'une contre l'autre, permettant d'obtenir ensuite, après sectionnement de la zone pincée, des portions P parfaitement fermées en leurs extrémités. Les portions P regroupées en lots sur la bande transporteuse 4 sont ensuite convoyées sous des douchettes de rinçage 40 et les sécheurs 41 pour être chargées en sortie dans des barquettes C.

## Revendications

1. Procédé de fabrication et de conditionnement de produits de type saucisse, selon lequel lesdits produits sont fabriqués par coextrusion en continu d'un boudin (B) enduit d'une base de départ comprenant un ou plusieurs hydrocolloïdes et destinée à constituer une peau par gélification calcique lors du passage dudit boudin dans un bain de gélification allongé, ledit boudin étant ensuite débité en portions (P) destinées à être conditionnées dans des barquettes (C) ;
lequel procédé est **caractérisé en ce que** plusieurs boudins (B) sont coextrudés en parallèle et selon une même vitesse de coextrusion, **en ce qu'**on les fait transiter dans un bain de gélification commun, **en ce qu'**ils sont rapprochés côte à côte pour être ensuite mis en portions (P) par des mêmes moyens agissant transversalement sur l'ensemble desdits boudins (B), afin de former des lots de produits identiques parfaitement regroupés et alignés pour être chargés dans leur barquette de conditionnement (C).

2. Dispositif pour la mise en oeuvre du procédé selon la revendication 1, **caractérisé en ce qu'**il comprend : une pluralité de têtes de coextrusion (1) alignées transversalement ; un bac de gélification (2) allongé horizontalement et dans l'extrémité amont duquel débitent lesdites têtes de coextrusion (1) ; des moyens pour rapprocher côte à côte les boudins (B) formés avant leur mise en portions ; des moyens communs (3) de mise en portions des boudins (B) agissant transversalement sur l'ensemble desdits boudins (B) rapprochés ; et des moyens pour charger dans leurs barquettes (C) les lots de produits formés en sortie desdits moyens de mise en portions (3).

3. Dispositif selon la revendication 2, **caractérisé en ce que** lesdits moyens pour rapprocher lesdits boudins (B) côte à côte sont des guides disposés dans la partie d'extrémité aval dudit bac de gélification (2).

4. Dispositif selon la revendication 2 ou 3, **caractérisé en ce que** la partie d'extrémité aval du bac de gélification (2) forme convergent.

5. Dispositif selon l'une des revendications 2 à 4, **caractérisé en ce que** le bac de gélification comprend un circuit pour recycler le bain de gélification et créer dans celui-ci un flux contribuant à y faire avancer lesdits boudins (B).

6. Dispositif selon l'une des revendications 2 à 5, **caractérisé en ce que** lesdits moyens de mise en portions (3) consistent en deux mêmes bandes sans fin (31, 32) synchronisées disposées l'une au-dessus de l'autre de manière à former entre elles pour lesdits boudins (B) rapprochés côte à côte un passage (30) se rétrécissant verticalement d'amont en aval, lesquelles bandes sans fin comprennent des tasseaux transversaux (33) passant en vis-à-vis dans ledit passage de manière à pincer progressivement d'amont en aval lesdits boudins (B) et finalement les sectionner.

7. Dispositif selon la revendication 6, **caractérisé en ce que** lesdits tasseaux (33) sont des profilés ayant une certaine élasticité leur permettant de s'écraser légèrement.

8. Dispositif selon la revendication 7, **caractérisé en ce que** lesdits tasseaux (33) sont des profilés creux à sommet arrondis.

9. Dispositif selon l'une des revendications 2 à 8, **caractérisé en ce qu'**une première bande transporteuse (4) orientée longitudinalement reçoit les lots de portions (P) formés en sortie desdits moyens de mise en portions (3), le long de laquelle sont prévus des moyens de rinçage (40) et de séchage (41) desdites portions (P).

10. Dispositif selon la revendication 9, **caractérisé en ce que** les lots de portions (P) sont transférés par gravité en bout de ladite première bande transporteuse (4), une seconde bande transporteuse (5) étant disposée au-dessous de celle-ci pour transporter en accumulation, à la même vitesse et dans la même direction lesdites barquettes, en les faisant passer par une position de chargement immédiatement au-dessous de l'extrémité aval de la première bande transporteuse (4).

## Patentansprüche

1. Verfahren zum Herstellen und Verpacken wurstartiger Produkte, bei welchem Verfahren die Produkte durch kontinuierliche Koextrusion einer Wurst (B) hergestellt werden, die von einer Ausgangsbasis überzogen wird, die ein oder mehrere Hydrokolloide umfaßt und die beim Durchlaufen der Wurst durch ein langes Gelierungsbad eine Haut bilden soll, wobei die Wurst anschließend in Portionen (P) aufgeteilt wird, die in rechteckigen Behältern (C) verpackt werden sollen;
**dadurch gekennzeichnet, daß** mehrere Würste (B) parallel und mit derselben Koextrusions-Geschwindigkeit koextrudiert werden, daß sie in ein gemeinsames Gelierungsbad befördert werden, daß sie einander Seite an Seite angenähert werden, um anschließend durch gleiche Einrichtungen in Portionen (P) aufgeteilt zu werden, welche Einrichtungen quer auf die Anordnung der Würste (B) einwirken, um identische Produktanteile zu bilden, die genau gruppiert und in einer Reihe angeordnet werden, um in deren rechteckigen Behälter (C) geladen zu werden.

2. Vorrichtung zur Umsetzung des Verfahrens nach Anspruch 1, **gekennzeichnet durch**: mehrere Koextrusions-Köpfe (1), die quer in einer Reihe angeordnet sind, einen Gelierbehälter (2), der sich horizontal erstreckt und in dessen stromaufwärtiges Ende die Koextrusions-Köpfe (1) münden, eine Einrichtung zum Annähern Seite an Seite der vor dem Portionieren geformten Würste (B), eine gemeinsame Einrichtung (3) zum Portionieren der Würste (B), die quer auf die Anordnung der angenäherten Würste (B) einwirkt und eine Einrichtung zum Laden der Produktanteile, die beim Ausgang aus der Portioniereinrichtung (3) gebildet sind, in deren rechteckige Behälter (C).

3. Vorrichtung nach Anspruch 2, **dadurch gekennzeichnet, daß** die Einrichtung zum Annähern Seite an Seite der Würste (B), Führungen sind, die an dem stromabwärtigen Endteil des Gelierbehälters (2) angeordnet sind.

4. Vorrichtung nach Anspruch 2 oder 3, **dadurch gekennzeichnet, daß** der stromabwärtige Endteil des Gelierbehälters (2) konvergiert.

5. Vorrichtung nach einem der Ansprüche 2 bis 4, **dadurch gekennzeichnet, daß** der Gelierungsbehälter einen Kreislauf umfaßt, um das Gelierungsbad wiederaufzubereiten und um in letzterem einen Fluß zu erzeugen, der dazu beiträgt, die Würste (B) in dem Gelierungsbehälter anzutreiben.

6. Vorrichtung nach einem der Ansprüche 2 bis 5, **dadurch gekennzeichnet, daß** die Einrichtung zum Portionieren (3) aus zwei gleichen endlosen, synchron laufenden Bändern (31, 32) besteht, die übereinander angeordnet sind, um zwischen sich einen Durchgang (30) für die nebeneinanderliegenden Würste (B) zu bilden, der sich in Förderrichtung vertikal verengt, wobei die endlosen Bänder Querstege (33) umfassen, die einander gegenüberliegend den Durchgang durchlaufen, so daß sie die Würste (B) in Strömungsrichtung nach und nach abquetschen und sie schließlich abtrennen.

7. Vorrichtung nach Anspruch 6, **dadurch gekennzeichnet, daß** die Querstege (33) Profilstücke mit einer bestimmten Elastizität sind, die leicht eingedrückt werden können.

8. Vorrichtung nach Anspruch 7, **dadurch gekennzeichnet, daß** die Querstege (33) hohle Profilstücke mit abgerundeten Spitzen sind.

9. Vorrichtung nach einem der Ansprüche 2 bis 8, **dadurch gekennzeichnet, daß** ein erstes Förderband (4), das in Längsrichtung ausgerichtet ist, die Portionsanteile (P) aufnimmt, die am Ausgang der Portioniereinrichtung (3) ausgebildet sind, wobei entlang des Förderbands eine Spüleinrichtung (40) und eine Trocknungseinrichtung (41) für die Portionen (P) vorgesehen sind.

10. Vorrichtung nach Anspruch 9, **dadurch gekennzeichnet, daß** die einzelnen Portionsanteile (P) unter dem Einfluß der Schwerkraft an das Ende des ersten Förderbandes (4) transportiert sind, wobei ein zweites Förderband (5) unterhalb des ersten angeordnet ist, um die rechteckigen Behälter gemeinsam mit derselben Geschwindigkeit und in dieselbe Richtung zu transportieren, damit sie eine unmittelbar unter dem stromabwärtigen Ende des ersten Förderbands (4) befindliche Ladeposition durchlaufen.

## Claims

1. Method for producing and packaging sausage type products, according to which said products are produced by continuously co-extruding a bead (B) coated with an starting base comprising one or several hydrocolloids and intended for constituting a skin by calcium gelation when said bead passes into an elongated gelation bath, said sausage being then cut up into portions (P) intended to be packed in trays( C ),
said method being **characterised in that** several beads (B) are co-extruded in parallel and according to a same co-extrusion speed, **in that** they are made to transit into a common gelation bath, **in that** they are brought side by side so as to be then cut up into portions (P) by given means acting transversally on all said beads (B) so as to form identical batches of products perfectly grouped and aligned to be loaded into their packaging tray (C).

2. Device for implementing the method according to claim 1, **characterised in that** it includes a plurality of transversally aligned co-extrusion heads (1) ; a gelation container (2) horizontally elongated and in the upstream extremity of which co-extrusion heads (1) discharge ; means for bringing side by side the formed beads (B) before being cut up into portions ; common means (3) for portioning said beads (B) into portions and acting transversally on all the beads (B) brought together ; and means for loading into their trays (C) the batches of products formed at the outlet of said portioning means (3).

3. Device according to claim 2, **characterised in that** said means for bringing side by side the beads (B) are guides placed in the downstream extremity portion of said gelation container (2).

4. Device according to claim 2 or 3, **characterised in that** the downstream extremity portion of the container (2) forms a converging section.

5. Device according to one of claims 2 to 4, **characterised in that** the gelation container comprises a circuit for recycling the gelation bath and creating in the latter a flow contributing in making the beads (B) move forward.

6. Device according to one of claims 2 to 5, **characterised in that** said portioning means (3) consist of two identical synchronized endless belt conveyors (31, 32) with one placed on top of the other so as to from between them for said beads (B) brought side by side a passage (30) narrowing vertically from upstream to downstream, said endless belt conveyors comprising transversal anvils (33) passing opposite each other in said passage so as to progressively squeeze from upstream to downstream said beads (B) and finally cut them up into portions.

7. Device according to claim 6, **characterised in that** said anvils (33) are profiles having a certain elasticity enabling them to be slightly crushed.

8. Device according to claim 7, **characterised in that** said anvils (33) are hollow profiles with rounded tops.

9. Device according to one of claims 2 to 8, **characterised in that** a first belt conveyor (4) oriented longitudinally receives the batches of portions (P) formed at the outlet of said portioning means (3) along which means are provided for rinsing (40) and drying (41) said portions (P).

10. Device according to claim 9, **characterised in that** the portion batches (P) are transferred via gravity at the strand of said first belt conveyor (4), a second belt conveyor (5) being placed below the latter so as to transport an accumulation, at the same speed and in the same direction, an accumulation of said trays by making them pass through a loading position immediately below the downstream extremity of the first belt conveyor (4).
